# EUROPEAN PATENT SPECIFICATION

(11) **EP 2 970 667 B1**
(45) Date of publication and mention of the grant of the patent: **16.09.2020**
(21) Application number: 14721588.3
(22) Date of filing: 11.03.2014
(51) Int. Cl.: C08L 83/06

(54) **EPOXY POLYSILOXANE RESIN COMPOSITIONS FOR COATINGS**
EPOXID-POLYSILOXAN-HARZZUSAMMENSETZUNGEN FÜR BESCHICHTUNGEN
COMPOSITIONS DE RÉSINES ÉPOXY POLYSILOXANE POUR DES REVÊTEMENTS

(30) Priority: 15.03.2013 US 201313839682
(43) Date of publication of application: 20.01.2016
(60) Divisional application: 20183401.7
(73) Proprietor: SWIMC LLC, Cleveland, Ohio 44115 (US)
(72) Inventor: CHAVAN, Vijay, Solon, OH 44139 (US); TOMKO, Richard, F., North Olmsted, OH 44070 (US); RAO, Madhukar, Twinsburg, OH 44087 (US); DELANEY, Michael, L., Brunswick, OH 44212 (US)
(74) Representative: Heinemann, Monica
(86) International application number: PCT/US2014/022975
(87) International publication number: WO 2014/150332

(56) References cited:
- EP-A2- 0 572 179
- US-A- 4 578 084
- US-A1- 2005 267 265
- US-B2- 7 074 856

## Description

### FIELD OF THE INVENTION

The following invention is directed to a resin composition comprising (1) an epoxysilicone resin; (2) an epoxyfluorosilicone resin and (3) optionally a fluorinated (or non-fluorinated) silane-modified polyacrylic resin. This invention is also directed to a coating composition comprising the resin and a curing agent, for use as a coating composition providing improved weatherability, chemical resistance, corrosion resistance, and abrasion resistance. The coating may additionally have pigments, fillers, defoamers, deaerators, solvent, flow and leveling agents.

### BACKGROUND OF INVENTION

Polysiloxanes are known for their excellent weatherability, low temperature flexibility, and thermal stability when compared to organic polymers (Noll, Walter; Chemistry and Technology of Silicones, Academic Press, 1968). Fluoropolysiloxanes on the other hand, are known to have better temperature stability, fuel and chemical resistance compared to organic polymers (Gomez-Anton et al. Polymer, Vol 28, Issue 12, 1987, pages 2116-2121). Polysiloxanes by themselves do not offer the mechanical properties desired in a coating. Hence, they are typically used in combination with other organic coatings. The resultant hybrid coatings when formulated properly can offer both the mechanical strength of organic polymers and durability of polysiloxanes.

One of the earliest examples of blending epoxy resins with polysiloxanes by Tyler, L. (US patent 3170962) described a method by which polyhydric phenols were reacted with hydroxy functional poly(methylphenyl)siloxane. Another patent by Ender, H. (US Patent 3,166,527) described a method by which amino functional silicone polymer was cured with epoxy resin. Steel panels coated with such resins (US Patent 3,166,527) exhibited excellent corrosion resistance. Both aromatic (diglycidyl ether of bisphenol A) as well as cycloaliphatic epoxy resins (3,4-epoxy-6-methylcyclohexylmethyl-3,4-epoxy-6-methylcyclohexanecarboxylate) were used for these coatings. Mikami, R. (US Patent 4287326) discussed a new way of making epoxy polysiloxane coatings by reacting epoxy modified polysiloxane with amino alkoxysilanes such as gamma-aminopropyltrimethoxysilane. Mowrer et al. (US Patent 5618860; US Patent 5804616) described use of hydrogenated bisphenol A type resin that was reacted with alkoxy or hydroxy functional silicone. This epoxy resin was cured with amine to obtain weatherable epoxy coating. US 2005/267265 A1 discloses epoxy resin compositions based on a component which comprises perfluoroalkyl and alkylsiloxane groups in addition to epoxy functionality. Some examples of this component are epoxy fluorosilicones.

Coating compositions containing fluorocarbon polymers are known. Fluoro functional silicones have been synthesized in the past by hydrosilylation of poly(hydromethyl)siloxane with vinyl fluoro compounds (Doeff et al.; Macromolecules 1989, 22, 2951-2957; Wilczek, L.; US patent 5233071). US Patent 5178959 by Eckberg et al describes a method by which fluorosilicone polymer with terminal silyl hydride groups were functionalized with vinyl compounds having epoxy group. This patent also discloses a method by which fluorosilicone with terminal hydroxy groups can be reacted with chlorodimethylsilane to obtain silyl hydride terminated silicone. These silicones were then reacted with vinyl compounds having epoxy group to obtain epoxy functional fluorosilicones.

Though epoxy resins have good chemical resistance, they tend to chalk when exposed to weathering conditions (Lee, Henry, Epoxy Resins, 1970, American Chemical Society).

In accordance with this invention, a novel blend of epoxy polysiloxanes, epoxy-functional fluorosilicones, and optionally fluorinated and/or non-fluorinated silane-modified polyacrylic resins is provided to obtain a coating that is weatherable and has a good chemical resistance. The invention is also directed to a coating composition comprising (a) a blend of epoxy polysiloxanes, epoxy-functional fluorosilicones (multi-functional, grafted, side chain modified), and optionally fluorinated and/or non-fluorinated silane-modified polyacrylic resins and (b) a curing agent, selected from the group consisting of aminosilane, aminoalkyl silane, aminosilanes having two or three silicon atoms, and aminosilanes with one or more amine groups, such as, for example, N-(2-aminoethyl)-3aminopropyltrimethoxysilane (EDA) and (3-trimethoxysilylpropyl)-diethylenetriamine (DETA). Optionally, in addition to the amino silane, methoxysilyl- or ethoxysilyl-functional fluoropolymer, and the fluorinated and non-fluorinated silane-modified polyacrylic resin, and other typical epoxy amine curatives, or combinations thereof, can be used as curing agents.

### SUMMARY OF THE INVENTION

The present invention is directed to a resin composition, comprising a blend of: (1) an epoxy polysiloxane resin; (2) an epoxyfluorosilicone resin; and (3) optionally a fluorinated (or non-fluorinated) silane-modified polyacrylic resin. The resin blend can comprise various combinations of the resins, from 5-99% by weight of the epoxy polysiloxane resin; up to 50% by weight of the epoxyfluorosilicone resin; and 0-99% by weight of the fluorinated (or non-fluorinated) silane-modified polyacrylic resin. Further, the present invention is directed to a coating composition comprising (a) a resin blend composition comprising an epoxy polysiloxane resin; an epoxyfluorosilicone resin; and a fluorinated (or non-fluorinated) silane-modified polyacrylic resin and (b) a curing agent, selected from the group consisting of aminosilane, aminoalkyl silane, aminosilanes having two or three silicon atoms, and aminosilanes with one or more amine groups, such as, for example, N-(2-aminoethyl)-3aminopropyltrimethoxysilane (EDA) and (3-trimethoxysilylpropyl)-diethylenetriamine (DETA). Further, the invention is directed to coating composition comprising an epoxy polysiloxane resin and a fluorinated (or non-fluorinated) silane-modified polyacrylic resin.

### DETAILED DESCRIPTION OF THE INVENTION

The features and advantages of the present disclosure will be more readily understood, by those of ordinary skill in the art, from reading the following detailed description. It is to be appreciated that certain features of the disclosure, which are, for clarity, described above and below in the context of separate embodiments, may also be provided in combination in a single embodiment. Conversely, various features of the disclosure that are, for brevity, described in the context of a single embodiment, may also be provided separately or in any sub-combination. In addition, references in the singular may also include the plural (for example, "a" and "an" may refer to one, or one or more) unless the context specifically states otherwise.

The use of numerical values in the various ranges specified in this application, unless expressly indicated otherwise, are stated as approximations as though the minimum and maximum values within the stated ranges were both proceeded by the word "about". In this manner, slight variations above and below the stated ranges can be used to achieve substantially the same results as values within the ranges. Also, the disclosure of these ranges is intended as a continuous range including every value between the minimum and maximum values.

### Resin Part A

### EPOXYSILICONE

The term "epoxy polysiloxane resins" (also referred to as "epoxy-functional polysilicone") as used herein is intended to have its customary meaning in the art, and includes a linear or branched polymeric constituent having one or more polysiloxane chains and having at least one epoxy functional group, including two or more epoxy groups, for example, diglycidyl functionality.

Any suitable epoxyfunctional polysilicone resin, and mixtures thereof, may be used in the inventive compositions. Various commercially available epoxy-functional polysilicone resin system may used with the present invention. For example, commercially available epoxy-functional polysilicone resin systems are sold by Degussa under the trademarks SILIKOPON® EW, SILIKOPON®EF and SILIKOFTAL® ED. Other commercially available epoxy-functional polysilicone resins that are useful with the present invention include HP1250 sold by Wacker Chemical Corporation, SLM 43226 commercially available from Wacker; ES-1002T and ES-1001T (silicone modified epoxy resin) sold by Shin Etsu. Of course, other types of pre-formulated epoxy-siloxane resin systems may be used or epoxy-siloxane resins may be prepared by methods known in the art.

### EPOXY-FUNCTIONAL FLUOROSILICONES

Epoxy-functional fluorosilicones ("epoxyfluorosilicones") are present in accordance with this invention. For example, epoxy-functional fluorosilicone materials may be prepared by means of a hydrosilation reaction of low molecular weight siloxanes or polysiloxanes containing reactive silyl-hydride (Si-H) functionality that couples with alkenes containing either fluorine or epoxy functionality, or both. In one embodiment, an epoxyfluorosilicone can be made by reacting a silyl hydride functionalized silicone (from Shin Etsu and Siltech Corp Canada), an allyl glycidyl ether and 3,3,4,4,5,5,6,6,6-nonafluorohexa-1-ene. First the fluorinated alkene is reacted with silyl hydride functionalized silicone followed by reaction with allyl glycidyl ether. Both reactions are conducted via a hydrosilation reaction using a platinum catalyst (Speire's or Karstedt's catalyst). Epoxy-functional fluorosilicones can be prepared according to methods taught in U.S. Patent No. 5,178,959 where epoxy-terminal groups are attached to the silicone. In another approach, fluorofunctional silicones with reactive -Si-H groups can be added to allyl glycidyl ether via hydrosilation to achieve a fluorofunctional epoxy silicone.

Generally, in one embodiment, epoxyfluorosilicones useful for this invention can be of the general formula: 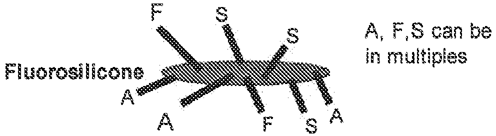 A, F,S can be in multiples
where 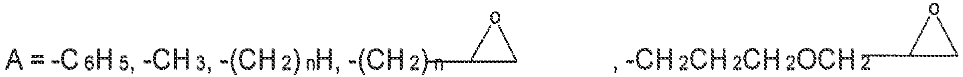 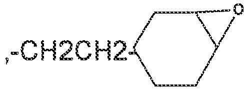
n > or equal to 1
F = -(CF₂)ₙF, -CH₂CH₂-(CF₂)ₙI
   n > or equal to 1
S = -CH₂CH₂Si(R₁)ₙ(OR₂)₍₃₋ₙ₎,
   n =0, 1 or 2
   R₁ and R₂ can be alkyl groups

### NON-FLUORINATED SILANE-MODIFIED POLYACRYLIC RESIN and FLUORINATED SILANE-MODIFIED POLYACRYLIC RESIN

A silane-modified polyacrylic resin can be derived from a polyacrylic resin modified with a moisture-curable silanated functional monomer. For example, isocyanatosilane or isocyanato-fluorinated functionality can be reacted with hydroxyfunctional polyacrylic resin to produce polyacrylic resins grafted with silane or fluorine. In another embodiment, a moisture-curable silane-modified polyacrylic resin can be prepared by free radical polymerization of acrylic monomers with moisture-curable, polymerizable silanated monomers such as (meth)acrylate or vinyl monomers with alkoxysilane functionality, such as the following: trialkoxysilyl alkyl (meth)acrylates, 3-((meth)acryloyloxy)propyltrimethoxysilane (trimethoxysilyl propyl (meth)acrylate), triethoxysilyl propyl (meth)acrylate, methacryloxymethyl trimethoxysilane, methacryloxymethyl triethoxysilane, (methacryloxymethyl) methyldimethoxysilane, (methacryloxymethyl) methyldiethoxysilane, vinyl trialkoxy silane, vinyl trimethoxy silane, vinyl triethoxy silane. A general synthesis of such moisture-curable silane-modified polyacrylic resins can be found in U.S. Patent Nos. 7,943,698 (Tomko) and 7,074,856 (Ho).

The fluorinated silane-modified polyacrylic resin can be derived from a polyacrylic resin modified with a moisture-curable silanated and fluorinated functionality. One method to prepare a fluorinated, moisture-curable, silane-modified polyacrylic resin is by free radical polymerization of acrylic monomers with moisture-curable, polymerizable silanated monomers and fluorine-containing monomers. Examples of fluorine-containing monomers can include perfluorinated monomers or a fluorine-containing monomer having the structure (I):

CH₂=CR-C(O)O-(CH₂)ₙ-R_{f} (I)

wherein R is hydrogen or methyl, n is an integer in the range of from 0 to 20, and R_{f} is a fluoroalkyl group having in the range of from 1 to 20 carbon atoms. In one embodiment, R is methyl, n is 2 and R_{f} is C₆F₁₃ which is commercially available as CAPSTONE™ 62-MA, methcaryloxy 3,3,4,4,5,5,6,6,7,7,8,8,8-tridecafluorooctyl ester (perfluorohexyl ethyl (meth)acrylate), from DuPont, Wilmington, Del. Examples of suitable fluorine containing monomers according to formula (I) can include, for example, 2,2,2- trifluoroethyl methacrylate, perfluoromethyl ethyl (meth)acrylate, perfluoroethyl ethyl (meth)acrylate, perfluorobutyl ethyl (meth)acrylate, perfluoropentyl ethyl (meth)acrylate, perfluorohexyl ethyl (meth)acrylate, perfluorooctyl ethyl (meth)acrylate, perfluorodecyl ethyl (meth)acrylate, perfluorolauryl ethyl (meth)acrylate, perfluorostearyl ethyl (meth)acrylate or combinations thereof. Other fluorinated monomers are known in the art and can be used.

The non-fluorinated and fluorinated resin can further comprise monomers such as, for example, methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, hexyl (meth)acrylate, 2-ethylhexyl (meth)acrylate, cyclohexyl (meth)acrylate, 2,2,5-trimethylcyclohexyl (meth)acrylate, isobornyl (meth)acrylate,octyl (meth)acrylate, nonyl (meth)acrylate, decyl (meth)acrylate, lauryl (meth)acrylate, stearyl (meth)acrylate, styrene, alpha methyl styrene, (meth)acrylamide, (meth)acrylonitrile, hydroxy (meth)acrylamide; hydroxy alkyl (meth)acrylates, hydroxy methyl (meth)acrylate, hydroxy ethyl (meth)acrylate, hydroxy propyl (meth)acrylate, hydroxy butyl (meth)acrylate; glycidyl (meth)acrylate, (meth)acrylic acid, ether and polyether extended alkyl (meth)acrylates, 2-ethoxy ethyl (meth)acrylate, 2-butoxy ethyl (meth)acrylate, poly(ethylene glycol) (meth)acrylate, polyester extended (meth)acrylate esters, caprolactone-extended hydroxyalkyl (meth)acrylates or a combination thereof, wherein the notation (meth)acrylate means acrylate or methacrylate. Multi-functional monomers may be used in minor amounts as long as the polymer does not gel during polymerization.

In one embodiment, the non-fluorinated silane-modified polyacrylic resin contains pendant organofunctional silane groups and comprises a mixture of (a) 1% to 50% by weight of one or more ethylenically unsaturated monomers, vinyl compounds such as styrene, acrylonitrile, α-methyl styrene; and 1% to 50% by weight of a moisture-curable organofunctional α-silane monomer.

In another embodiment, fluorinated silane-modified polyacrylic resin contains pendant organofunctional silane groups comprises a mixture of (a) 1% to 50% by weight of one or more ethylenically unsaturated monomers, and vinyl compounds such as styrene, acrylonitrile, α-methyl styrene; 1% to 50% by weight of a moisture-curable, organofunctional silane monomer and 0.1% by weight to 50% by weight of a fluorine-containing monomer as defined above, based on the total weight of monomers.

Examples of useful moisture-curable, organofunctional silane monomers according to this invention include alpha-silanes such as trialkoxysilyl alkyl (meth)acrylates, 3-((meth)acryloyloxy)propyltrimethoxysilane (trimethoxysilyl propyl (meth)acrylate), triethoxysilyl propyl (meth)acrylate vinyl trialkoxy silane, vinyl trimethoxy silane, vinyl triethoxy silane,

Other organofunctional silane monomers include trialkoxysilyl alkyl (meth)acrylate monomers such as (methacryloxy-methyl) methyldimethoxy-silane, (methacryloxymethyl)trimethoxy-silane, (methacryloxymethyl)methyldiethoxy-silane, and (methacryloxymethyl)triethoxy-silane, GENIOSIL® XL-30 series, such as GENIOSIL® XL-32, XL-33, XL-34 and XL-36, available from Wacker Chemie AG, may be used.

The amount of organofunctional silane present in both the fluorinated and non-fluorinated polyacrylic resin polymer composition can be about 1% to about 50% by weight, preferably 2% to 25% by weight, and most preferably, 5% to 15% by weight, of the total weight of monomers.

The amount of fluorine-containing monomer present in the fluorinated, silanated polyacrylic resin polymer composition can be about 0.1% to about 50% by weight, preferably 0.5% to 25% by weight, and most preferably, 1% to 15% by weight, of the total weight of monomers.

The polymerization or other modification of the fluorinated, silanated polyacrylic resin is preferably carried out in a non-functional volatile solvent, such as xylene, toluene, and other aromatics, t-butyl acetate, n-butyl acetate, ethyl-3-ethoxypropionate, , p-chlorobenzotrifluoride, acetone, methyl ethyl ketone, and other ester solvents. In general, suitable solvents or reactive diluents include those that will not polymerize with the monomers. However, alcoholic solvents may be used or added after polymerization. Reactive diluents, that may be used in the polymerization reaction to replace the solvents or in addition to the solvents may be silicone resins, especially liquid, reactive silicone resins such as SY-231 available from WACKER; DC-3074 available from DOW CORNING Corporation of Midland Michigan, and the SILIKOPON or SILIKOFTAL epoxy polysiloxane resins from DEGUSSA.

Generally, any of the free radical initiators known to the art can be utilized. Suitable free radical initiators include any of the alkyl peroxides such as tert-amyl and tert-butyl peroxides, di-tert-butyl peroxide, peresters such as tert-butyl perbenzoate, tert-butyl peroxy-3,5,5-trimethylhexanoate, 2,5-bis(2-ethylhaxanoyl-peroxy)-2,5-dimethylhexane, or tertiary butyl peroctoate, and any of the various known azo initiators such as 2,2'-azobisisobutyronitrile. Particularly preferred are 2,2'-azobisisobutyronitrile or 2,2'-azo-bis(2-methylbutyronitrile) (Vazo 67 from DuPont). For example, the weight of the free radical initiator used (by weight based on monomers) is generally at least 0.5%. A chain transfer agent, such as a mercaptosilane chain transfer agent (for example, (3-mercaptopropyl)trimethoxysilane, Silquest® A-189 available from Momentive Corporation) can be utilized during the free radical polymerization of the invention. In addition, other chain transfer agents could be used with A-189 such as alkyl thiols (e.g. dodecanthiol) and the like. The amount of chain transfer agent used (by weight based on monomers) is generally at least 0.5%, preferably 1 to 10%, or a level of 0.5 to 7% initiator can be used in conjunction with 1 to 10% chain transfer agent.

As an example, for both the non-fluorinated and fluorinated silane-modified polyacrylic resins, the solvent is charged to the reactor and the monomers, α-silane-containing monomer, fluoro-containing monomer(s) (as for fluorinated version) and initiator and chain transfer agent can be mixed together as one feed, and then polymerized and chased with additional solvent and initiator. For example, the solvent can be heated to a temperature at about 102°C., and the monomers, initiator, and chain transfer agent can be added over a period of 2-4 hours, preferably in 3 hours, while the temperature of the solution is maintained during the addition and for a further period of 0.5 to 4 hours after the addition. Then a further charge of initiator (chase) may be added during this further period to reduce the level of unreacted monomer. The level of unreacted monomer may be further reduced with additional charges of initiator. owever, it is also possible to reduce this level by distilling off the unreacted monomer from the reaction mixture.

In one embodiment, the non-fluorinated resin comprises a mixture of (a) 1% to 50% by weight of one or more ethylenically unsaturated monomers, whereby at least one of the unsaturated monomers can be an acrylic ester such as butyl (meth)acrylate, methyl (meth)acrylate, ethyl (meth)acrylate, propyl (meth)acrylate, n-hexyl (meth)acrylate, isopropyl (meth)acrylate, isobutyl (meth)acrylate, 2-ethylhexyl (meth)acrylate, cyclohexyl (meth)acrylate, 2,2,5-trimethylcyclohexyl (meth)acrylate, isobornyl (meth)acrylate, and lauryl (meth)acrylate; (b) 1% to 50% by weight of an unsaturated monomer such as styrene, acrylonitrile, α-methyl styrene; and (c) 1% to 50% by weight of an organofunctional α-silane monomer.

In another embodiment, the fluorinated resin comprises a mixture of (a) 1% to 50% by weight of one or more ethylenically unsaturated monomers, whereby at least one of the unsaturated monomers can be an acrylic ester such as butyl (meth)acrylate, methyl (meth)acrylate, ethyl (meth)acrylate, propyl (meth)acrylate, n-hexyl (meth)acrylate, isopropyl (meth)acrylate, isobutyl (meth)acrylate, 2-ethylhexyl (meth)acrylate, cyclohexyl (meth)acrylate, 2,2,5-trimethylcyclohexyl (meth)acrylate, isobornyl (meth)acrylate, and lauryl (meth)acrylate; (b) 1 to 50% by weight of an unsaturated monomer such as styrene, acrylonitrile, α-methyl styrene; and (c) 1% to 50% by weight of an organofunctional a -silane monomer; and (d) 0.1% to 50% by weight of a fluorine-containing monomer.

### Part A Resin Blend

The resin blend composition can be various combinations of the epoxy polysiloxane resin; the epoxyfluorosilicone resin; and fluorinated (or non-flurorinated) silane-modified polyacrylic resin that are mixed as a cold blend in any device which is capable of uniformly dispersing the components in the resin blend, such as an internal mixer or an extruder, the latter being preferred for commercial preparations. The temperature is preferably kept as low as practical consistent with good mixing so as not to degrade the resin.

These resins can also be hot blended,and then cooled down to room temperature. Other additives such as pigments, fillers, defoamers, deaerators, UV absorbers, hindered amine light stabilizers may then be added to this mixture.

### Part B

A coating composition produced from the resin blend of Part A can be cured with an amino-functional compound as a curing agent. The term "amino-functional compound" as used herein is intended to encompass any compound that has at least one amino group capable of reacting with an epoxy group to form a ring-opened product, including amino-functional silicon compound(s) as well as amino- functional compounds of non-silicon origin such as organic and inorganic amino compounds.

Examples of amine curing agent is an aminosilane, more preferably an aminoalkyl silane containing at least two alkoxy groups bonded to silicon. Examples of suitable aminoalkyl silanes are primary amines such as such as (3-aminopropyl)trimethoxysilane, (3-aminopropyl)triethoxysilane , modified aliphatic amines, cycloaliphatic amines, and modified cycloaliphatic amines. Similar aminosilanes having two or three silicon atoms can also be used, or any combinationsof the above thereof, such as, for example, N-(2-aminoethyl)-3-aminopropyltrimethoxysilane (EDA) and (3-trimethoxysilylpropyl)-diethylenetriamine (DETA) and N-[3-(Trimethoxysilyl)propyl] ethylene diamine.

In addition to aminosilanes, some optional curing agents can include moisture-curable methoxy- or ethoxy-silyl-functional fluoropolymer, and the fluorinated and non-fluorinated silane-modified polyacrylic resin of Part A can also be used in this Part B, as long as care is taken to minimize moisture.

Other optional commercially available amine curing agents used in addition to aminosilanes include, EPIKURE Curing Agent 3230, EPIKURE Curing Agent 3233, EPIKURE Curing Agent 3253, EPIKURE Curing Agent 3300, EPIKURE Curing Agent 3370, EPIKURE Curing Agent 3378, EPIKURE Curing Agent 3381, EPIKURE Curing Agent 3387, EPIKURE Curing Agent 3389 any combination of the above curing agents.

### COATING COMPOSITION

The coating composition of this invention is the reaction product of (1) a resin blend of (a) epoxysilicone; (b) an epoxyfluorosilicone and (c) optionally a fluorinated (or non-fluorinated) silane-modified polyacrylic resin; and (2) a curing agent, selected from the group consisting of aminosilane, aminoalkyl silane, aminosilanes having two or three silicon atoms, and aminosilanes with one or more amine groups, such as, for example, N-(2-aminoethyl)-3aminopropyltrimethoxysilane (EDA) and (3-trimethoxysilylpropyl)-diethylenetriamine (DETA). The coating composition can also be a reaction product of an epoxysilane and a fluorinated (or non-fluorinated) silane-modified polyacrylic resin curing agent.

Depending on the field of application, the coating compositions of the invention may further comprise one or more additional ingredients common to the paint industry. They may comprise one or more pigments, like titanium dioxide (R-706, R-960, TS 6200, Kronos 2190, Kronos 2300), coloring agents such as yellow or red iron oxide or a phthalocyanine pigment, pigment dispersing agents, light stabilizers (Eversorb 93,Eversorb 95, Eversorb 765 commercially available from Everlight USA Inc., Tinuvin 123, Tinuvin 5100, Tinuvin 152, Tinuvin 144, Tinuvin 292 commercially available from BASF Corporation), UV absorbers (Eversorb 80, Eversorb 81, Omnistab 1130, Omnistab 320, Tinuvin 400 , Tinuvin 328, Tinuvin 477, Tinuvin 900, Tinuvin 479), thixotropic agents, and/or one or more strengthening pigments such as micaceous iron oxide or crystalline silica and/or one or more anticorrosive pigments such as metallic zinc, zinc phosphate, wollastonite and/or a filler pigment such as barytes, talc or calcium carbonate, mineral clay, fumed silica (such as CAB-O-SIL CT-1206,CAB-O-SIL H-300, CAB-O-SIL CT-1111G, Aerosil R-972, Aerosil R-805, Aerosil R-812). The composition may comprise a thickening agent such as fine-particle sized silica, bentonite clay, hydrogenated castor oil, or a polyamide wax.

The coating compositions of the invention in general can be used as finish coatings and/or primer coatings. Finished coating compositions exhibit high gloss which is retained remarkably well on weathering and UV exposure. They are particularly suitable for coating substrates which are exposed to weather for long periods. The highest levels of gloss may be achieved if the coating composition includes an organic solvent such as xylene. The coating composition may also contain an alcohol (e.g. methanol, ethanol or other alcohols which has the added benefit of improving stability), moisture scavengers, and solvents.

A finish coating according to the invention can be applied over various unprimed or primed coating surfaces. The coating composition can be used as a finished coat on concrete, metals, plastics, wood, steel structures, buildings, automobiles, aircraft and other vehicles, and general industrial machinery. The finished coat can be either pigmented or clear (non-pigmented). The coating composition can also be applied directly to metal substrates like Bonderite, cold rolled steel, galvanized steel, hot dipped steel, blasted steel, and aluminum.

### EXAMPLES

### Example 1

### Preparation of an Epoxyfluorosilicone

In a glass flask, silyl hydride functional silicone (1 mol of silyl hydride groups) and 2-3 drops of platinum catalyst (Speier's catalyst or Karstedt's catalyst supplied by Gelest, Inc.) dissolved in 2 mL of xylene were added. The mixture was allowed to stir for 10 minutes. Measured quantity of 3,3,4,4,5,5,6,6,6-nonafluorohexa-1-ene (0 to 0.99 mols) was added into this flask and the mixture was slowly heated to 55° C. After 24 hrs, the remaining amount of allyl glycidyl ether (1- 0.01 mols) was added to this mixture and the reaction was carried out for another 24 hrs.

### EXAMPLES 2-5

### Non-fluorinated and Fluorinated silane-modified polyacrylic resin General Procedure:

Charge solvent and/or epoxysilicone and/or reactive diluent to the reactor and heat to 102C. Feed monomers-mixture over three hours. The monomer mixture may contain the initiator, or the initiator may be fed as a separate feed. Hold 30 - 60 minutes, chase over three hours with additional initiator solution and, optionally, a second chase for 30 -180 minutes at 102C. Hold 30 - 60 minutes, then filter while hot.

### EXAMPLES

In Examples 2 -4, the non-fluorinated and fluorinated silane-modified polyacrylic resin resins can be prepared by the following procedure: Charge the n-butyl acetate under nitrogen and heat to 102C. Feed the monomers and initiator over 3 hours. After feeds are added, hold for ½ hour and feed chase over 2.5 hours, then hold for 45 mins and cool. Filter with a 25 micron bag. (In Example 5, the Silikopon EF epoxysilicone is added to the charge, following the same procedure as in Examples 2-4.

### Example #3

### Fluorinated silane-modified polyacrylic resin

To a 3-Liter reactor equipped with a nitrogen inlet, stirrer, condenser, thermocouple and feed inlet, 225g of n-butyl acetate was charged and heated to 102°C. A mixture of 275g methyl methacrylate, 312.9g 2-ethylhexylacrylate, 108g mercaptopropyltrimethoxysilane (SILQUEST A-189, Momentive), 186.2g styrene, 121g methacryloxymethyltrimethoxysilane (Geniosil XL-33, Wacker), 85g 2,2,2-trifluoroethylmethacrylate (TOSOH USA), and 26g VAZO 67 (DuPont USA) was added over three hours, and then the reaction was held for 30-minutes at 102°C.

A mixture of 15g VAZO 67 and 75g n-butyl acetate was added as a chase to reduce residual monomer over 2.5 hours, and then held for another 30-minutes at 102°C.

A second chase consisting of 5g VAZO 67 and 25g n-butyl acetate was added over 90-minutes, held another 30-minutes at 102°C, and filtered while hot through a 25-micron filter bag.

NVM (non-volatile material) = 73.4% Viscosity (Brookfield Viscometer LVT #3 Spindle at 25C) = 1232 centipoise (cps)

### Example #5

### Fluorinated silane-modified polyacrylic resin with Silikopon EF epoxysilicone added to the charge

To a 3-liter reactor equipped with a nitrogen inlet, stirrer, condenser, thermocouple and feed inlet, a mixture of 200g epoxysilicone (Silikopon EF, Degussa) and 112.5g n-butyl acetate was charged and heated to 102°C. A mixture of 366.9g methylmethacrylate, 262.9g 2-ethylhexylacrylate, 108.3g mercaptopropyltrimethoxysilane (SILQUEST A-189, Momentive), 186.2g styrene, 121.86g methacryloxymethyltrimethoxysilane (Geniosil XL-33, Wacker), 42.95g perfluorohexyl ethylmethacrylate (CAPSTONE 62-MA, DuPont USA), and 25g VAZO 67 (DuPont USA) was added over three hours, and then the reaction was held for 30-minutes at 102°C.

A mixture of 16.5g VAZO 67 and 75g n-butyl acetate was added as a chase to reduce residual monomer over 2.5 hours, then held for another 45-minutes at 102°C, and filtered while hot through a 25-micron filter bag.

NVM (non-volatile material) = 83.39% Viscosity (Brookfield Viscometer LVT #3 Spindle at 25C) = 9800 centipoise (cps)

| **Material** | **Non-fluorinated Example 2 (wt %)** | **Fluorinated Example 3 (wt %)** | **Fluorinated Example 4 (wt %)** | **Fluorinated Example 5 (wt %)** |
|---|---|---|---|---|
| **Charge** | | | | |
| n-Butyl Acetate | | 15.42 | 20.25 | 7.29 |
| t-Butyl Acetate | 25.28 | | | |
| Silikopon EF | | -- | -- | 12.96 |
| | | | | |

| **Monomers** | | | | |
|---|---|---|---|---|
| Methyl methacrylate | 20.77 | 18.85 | 23.78 | 23.78 |
| 2-Ethylhexyl acrylate | 20.17 | 21.44 | 17.04 | 17.04 |
| Silquest A-189 | 7.66 | 7.40 | 7.02 | 7.02 |
| Styrene | 13.06 | 12.76 | 12.07 | 12.07 |
| Geniosil XL-33 alpha-silane | 7.66 | 8.29 | 7.90 | 7.90 |
| 2,2,2-Trifluoroethylmethacrylate | -- | 5.83 | -- | -- |
| Capstone 62-MA | | -- | 2.78 | 2.78 |
| VAZO 67 | | 1.78 | 1.62 | 1.62 |
| | | | | |

| **Initiator** | | | | |
|---|---|---|---|---|
| VAZO 67 | 1.40 | 1.03 | -- | -- |
| n-Butyl Acetate | | 5.14 | 1.62 | 1.62 |
| | | | | |

| **Chases** | | | | |
|---|---|---|---|---|
| VAZO 67 | 0.43 | 1.37 | 1.07 | 1.07 |
| n-Butyl acetate | | 6.85 | 4.86 | 4.86 |
| t-Butyl acetate | 3.57 | | | |
| | | | | |
| NVM | 69.5 | 73.4 | 69.05 | 83.39 |
| Viscosity (Brookfield Viscometer LVT #3 Spindle at 25C) | | 1232 cps | 756 cps | 9800 cps |

### RESIN BLEND

The three resins can be mixed as a cold blend and carried out in any device which is capable of uniformly dispersing the components in the resin blend, such as an air mixer, internal mixer or an extruder, the latter being preferred for commercial preparations, wherein the temperature is preferably kept as low as practical consistent with good mixing so as not to degrade the resin. Depending upon the particular system, order of mixing is generally not critical. It is also contemplated that the epoxysilicone and fluorinated (or non-fluorinated) silane-modified polyacrylic resin can be blended at 90C, for 2-3 hours, while bubbling nitrogen below the surface of the blend, then filtered while hot. Optimum temperatures, mixing times and other conditions of the mixing operation depend upon the particular resin and other components under consideration and these may be determined by routine experimentation by those skilled in the art.

### PAINT EXAMPLE

A coating composition can be prepared using the resins of Examples 2-5 above. Various combinations of these resins can be used, based on the intended coating application.

| **Part A** | Wt % |
|---|---|
| Epoxysilicone | 05-99% |
| Epoxyfluorosilicone | 0-50% |
| Fluorinated and non-fluorinated silane-modified polyacrylic resin | 05-99% |
| UV absorber | 0-3% |
| Hindered amine light stabilizer (HALS) | 0-3% |
| TiO2 | 0-60% |
| Extenders | 0-60% |
| Solvent | 0-60% |
| | |

| **Part B** | |
|---|---|
| Amine | 05-100% |
| Fluorinated and non-fluorinated silane-modified polyacrylic resin | 05-100% |
| Solvent | 0-60% |

A coating composition can be prepared using the resins of Examples 2-6 above.

### EXAMPLE (NON-INVENTIVE)

Preparation of Coating Composition Comprising Non-Fluorinated Silane-modified Polyacrylic Resin of Example 2

**Grind Preparation:** Silikopon EF or HP 1250 was mixed with Airex 900, Tinuvin 400, and Tinuvin 292, and xylene for 5 minutes using air mixer (Cowles blade). R-960 (TiO2) was added and the mixture was stirred for another 20 minutes. Aerosil R 972 was added to this mixture and the mixture was again stirred for 20 minutes. Silane-modified polyacrylic resin was added to this mixture on top and the can was closed with a lid. The entire contents of the can were stirred using industrial shaker.

Ingredients were mixed in quantities mentioned above. The samples were drawn down or spray coated and cured at room temperature for 7 days.
Units: 1 lb = 0.454 kg.

| **Part A** | (lbs) |
|---|---|
| Silikopon EF | 25.00 |
| R-960 | 17.50 |
| Aerosil R972 | 0.42 |
| Airex 900 | 0.43 |
| Tinuvin 292 | 0.84 |
| Tinuvin 400 | 0.84 |
| Nisocryl | 45.00 |
| Xylene | 4.50 |
| Total | 94.5 |

| **Part B** | |
|---|---|
| (3-Aminopropyl)triethoxysilane | 6.15 |

| | (lbs) |
|---|---|
| **Part A** | |
| HP 1250 | 27.80 |
| R-960 | 19.46 |
| Aerosil R972 | 0.46 |
| Airex 900 | 0.47 |
| Tinuvin 292 | 0.93 |
| Tinuvin 400 | 0.93 |
| NISO or fluorinated NISO | 41.60 |
| Xylene | 5.00 |
| Total | 96.65 |

| **Part B** | |
|---|---|
| 3-Aminopropyl)triethoxysilane | 4.76 |

### EXAMPLES (NON-INVENTIVE)

### Preparation of Coating Composition Comprising Fluorinated Silane-modified Polyacrylic Resin

**Grind Preparation:** Silikopon EF or HP1250 was mixed with Airex 900, Tinuvin 400, and Tinuvin 292, and xylene for 5 minutes using air mixer (Cowles blade). R-960 (TiO2) was added and the mixture was stirred for another 20 minutes. Aerosil R 972 was added to this mixture and the mixture was again stirred for 20 minutes. Silane-modified polyacrylic resin was added to this mixture on top and the can was closed with a lid. The entire contents of the can were stirred using industrial shaker.

**Making of coatings:** Ingredients were mixed in quantities mentioned above. The samples were drawn down or spray coated and cured at room temperature for 7 days. Units: 1 lb = 0.454 kg.

| Part A | (lbs) |
|---|---|
| Silikopon EF | 25.00 |
| R-960 | 17.50 |
| Aerosil R972 | 0.42 |
| Airex 900 | 0.43 |
| Tinuvin 292 | 0.84 |
| Tinuvin 400 | 0.84 |
| Fluorinated Resin of Example 5 | 45.00 |
| Xylene | 4.50 |
| Total | 94.5 |

| Part B | |
|---|---|
| (3-Aminopropyl)triethoxysilane | 6.15 |

## Claims

1. A resin composition, comprising a blend of: (1) an epoxy polysiloxane resin; (2) an epoxyfluorosilicone resin; and (3) a fluorinated silane-modified polyacrylic resin.

2. A resin composition, comprising a blend of: (1) an epoxy polysiloxane resin; (2) an epoxyfluorosilicone resin; and (3) a silane-modified polyacrylic resin.

3. A resin composition, comprising a blend of (1) an epoxy polysiloxane resin; and (2) an epoxyfluorosilicone resin.

4. A coating composition comprising: (a) the resin composition of claim 1; and (b) a curing agent, selected from the group consisting of aminosilane, aminoalkyl silane, aminosilanes having two or three silicon atoms, and aminosilanes with one or more amine groups.

5. The coating composition of claim 4, wherein the curing agent is selected from the group consisting of N-(2-aminoethyl)-3aminopropyltrimethoxysilane (EDA) and (3-trimethoxysilylpropyl)-diethylenetriamine.

6. The coating composition of claim 4, wherein the curing agent further comprises methoxysilyl- or ethoxysilyl-functional fluoropolymer, and the fluorinated and non-fluorinated silane-modified polyacrylic resin, or combinations thereof.

7. A coating composition comprising (a) the resin composition of claim 2 and (b) methoxysilyl- or ethoxysilyl-functional fluoropolymer, and the fluorinated and non-fluorinated silane-modified polyacrylic resin, or combinations thereof.

8. A coating composition comprising (a) the resin composition of claim 3; and (b) a curing agent, selected from the group consisting of aminosilane, aminoalkyl silane, and aminosilanes having two or three silicon atoms.

## Patentansprüche

1. Eine Harzzusammensetzung, umfassend eine Mischung aus: (1) einem Epoxid-Polysiloxan-Harz, (2) einem Epoxid-Fluorsilicon-Harz und (3) einem mit fluoriertem Silan modifizierten Polyacrylharz.

2. Eine Harzzusammensetzung, umfassend eine Mischung aus: (1) einem Epoxid-Polysiloxan-Harz, (2) einem Epoxid-Fluorsilicon-Harz und (3) einem mit Silan modifizierten Polyacrylharz.

3. Eine Harzzusammensetzung, umfassend eine Mischung aus (1) einem Epoxid-Polysiloxan-Harz und (2) einem Epoxid-Fluorsilicon-Harz.

4. Eine Beschichtungszusammensetzung, umfassend: (a) die Harzzusammensetzung nach Anspruch 1 und (b) ein Härtungsmittel, ausgewählt aus der Gruppe bestehend aus Aminosilan, Aminoalkylsilan, Aminosilanen mit zwei oder drei Siliziumatomen, und Aminosilanen mit einer oder mehreren Amingruppen.

5. Die Beschichtungszusammensetzung nach Anspruch 4, wobei das Härtungsmittel ausgewählt ist aus der Gruppe bestehend aus N-(2-Aminoethyl)-3-aminopropyltrimethoxysilan (EDA) und (3-Trimethoxysilylpropyl)-diethylentriamin.

6. Die Beschichtungszusammensetzung nach Anspruch 4, wobei das Härtungsmittel ferner Methoxysilyl- oder Ethoxysilyl-funktionelles Fluorpolymer und das mit fluoriertem und nichtfluoriertem Silan modifizierte Polyacrylharz oder Kombinationen davon umfasst.

7. Eine Beschichtungszusammensetzung, umfassend (a) die Harzzusammensetzung nach Anspruch 2 und (b) Methoxysilyl- oder Ethoxysilyl-funktionelles Fluorpolymer und das mit fluoriertem und nichtfluoriertem Silan modifizierte Polyacrylharz oder Kombinationen davon.

8. Eine Beschichtungszusammensetzung, umfassend (a) die Harzzusammensetzung nach Anspruch 3 und (b) ein Härtungsmittel, ausgewählt aus der Gruppe bestehend aus Aminosilan, Aminoalkylsilan und Aminosilanen mit zwei oder drei Siliziumatomen.

## Revendications

1. Composition résinique comprenant un mélange : (1) d'une résine époxy-polysiloxane ; (2) d'une résine époxy-fluorosilicone ; et (3) d'une résine polyacrylique modifiée par un silane fluoré.

2. Composition résinique comprenant un mélange : (1) d'une résine époxy-polysiloxane ; (2) d'une résine époxy-fluorosilicone ; et (3) d'une résine polyacrylique modifiée par un silane.

3. Composition résinique comprenant un mélange (1) d'une résine époxy-polysiloxane ; et (2) d'une résine époxy-fluorosilicone.

4. Composition de revêtement comprenant : (a) la composition résinique de la revendication 1 ; et (b) un agent de durcissement sélectionné dans le groupe consistant en un aminosilane, un aminoalkylsilane, des aminosilanes ayant deux ou trois atomes de silicium et des aminosilanes portant un ou plusieurs groupements amines.

5. Composition de revêtement de la revendication 4, où l'agent de durcissement est sélectionné dans le groupe consistant en le N-(2-aminoéthyl)-3-aminopropyltriméthoxysilane (EDA) et la (3-triméthoxysilylpropyl)-diéthylènetriamine.

6. Composition de revêtement de la revendication 4, où l'agent de durcissement comprend en outre un fluoropolymère à fonction méthoxysilyle ou éthoxysilyle et la résine polyacrylique modifiée par un silane fluoré et non fluoré, ou des combinaisons de ceux-ci.

7. Composition de revêtement comprenant (a) la composition résinique de la revendication 2 et (b) un fluoropolymère à fonction méthoxysilyle ou éthoxysilyle et la résine polyacrylique modifiée par un silane fluoré et non fluoré, ou des combinaisons de ceux-ci.

8. Composition de revêtement comprenant (a) la composition résinique de la revendication 3 ; et (b) un agent de durcissement sélectionné dans le groupe consistant en un aminosilane, un aminoalkylsilane et des aminosilanes ayant deux ou trois atomes de silicium.
